# EUROPÄISCHE PATENTSCHRIFT

(11) **EP 3 369 949 B1**
(45) Veröffentlichungstag und Bekanntmachung des Hinweises auf die Patenterteilung: **22.04.2020**
(21) Anmeldenummer: 18159479.7
(22) Anmeldetag: 01.03.2018
(51) Int. Cl.: F16B 45/00, B60P 7/08

(54) **ANSCHLAGPUNKT ODER ZURRPUNKT MIT MAGNET**
ANCHORAGE POINTS OR LASHING POINT WITH MAGNET
POINT D'ANCRAGE OU POINT D'AMARRAGE À AIMANT

(30) Priorität: 03.03.2017 DE 202017101234 U
(43) Veröffentlichungstag der Anmeldung: 05.09.2018
(73) Patentinhaber: Thiele GmbH & Co. KG, 58640 Iserlohn (DE)
(72) Erfinder: Norpoth, Bernhard, 45309 Essen (DE)
(74) Vertreter: Osterhoff, Utz

(56) Entgegenhaltungen:
- DE-A1- 10 311 805
- DE-U1- 20 313 685
- DE-U1-202013 005 581
- JP-A- 2001 221 375
- US-B1- 9 345 312

## Beschreibung

Die vorliegende Erfindung betrifft einen Anschlagpunkt oder Zurrpunkt gemäß den Merkmalen im Oberbegriff von Patentanspruch 1.

Aus dem Stand der Technik ist es bekannt, Anschlagpunkte oder Zurrpunkte an zu hebenden Gegenständen oder auf einem Untergrund bzw. einer Ladefläche anzubringen. Beispielsweise werden derartige Anschlagpunkte oder Zurrpunkte an Containern festgelegt. Auch können Anschlagpunkte oder Zurrpunkte auf oder seitlich an der Ladefläche eines Transportfahrzeuges gekoppelt werden.

Damit der Anschlagpunkt oder Zurrpunkt für logistische Arbeiten, beispielsweise beim Verladen oder Transportieren, Be- oder Entladen von Gegenständen oder an abgestellten Containern nicht störend übersteht, sind aus dem Stand der Technik bekannte Anschlagpunkte oder Zurrpunkte zumeist in einer Ruheposition angeordnet. Aus der Ruheposition können sie in eine Gebrauchsposition verbracht werden.

Ein Ösenkörper eines Anschlagpunktes oder Zurrpunktes hat ein Eigengewicht von mehreren Hundert Gramm oder gar Kilogramm. Zumeist ist der Ösenkörper aus einem Stahlwerkstoff, zumindest jedoch aus einem Leichtmetallwerkstoff hergestellt. Liegt dieser in der Ruheposition auf einem Gegenstand oder Untergrund auf, bzw. ist in einer Ruheposition versenkt gelagert, so kommt es bei Nichtgebrauch unter Umständen zu einer störenden Geräuschbildung. Auch kann die Ruheposition in unkontrollierter und ungewollter Weise verlassen werden.

Aus der DE 20 2015 100 857 U1 ist bekannt, eine Fixierscheibe an einem Anschlagpunkt oder Zurrpunkt anzuordnen, dergestalt, dass der Ösenkörper in einer beliebigen Position fixiert werden kann. Hierzu ist jedoch ein drittes externes Mittel, die Fixierscheibe notwendig.

Aus der DE 20 2013 005 581 U1, DE 103 11 805 A1 und DE 203 13 685 U1 sind ebenfalls Zurrpunkte bekannt, die abgeklappt werden können.

Aufgabe der vorliegenden Erfindung ist es daher, einen Anschlagpunkt oder Zurrpunkt derart weiterzubilden, dass dieser einfach und effektiv eine Ruheposition einnehmen kann und in dieser lagefixiert gehalten ist.

Die zuvor genannte Aufgabe wird erfindungsgemäß mit den Merkmalen von Patentanspruch 1 gelöst.

Vorteilhafte Ausgestaltungsvarianten der vorliegenden Erfindung sind Gegenstand der abhängigen Ansprüche.

Der Anschlagpunkt oder Zurrpunkt wird an einem Gegenstand bzw. auf einem Untergrund befestigt. Bei Gebrauch wird der Anschlagpunkt oder Zurrpunkt mit einem Hebe-, Zug- oder Zurrmittel gekoppelt. Beispielsweise wird ein Haken eingehängt oder ein Zurrband oder eine Befestigungskette hindurchgezogen. Hierzu weist der Anschlagpunkt oder Zurrpunkt einen Ösenkörper auf. Insbesondere ist der Ösenkörper als umlaufend geschlossene Öse ausgebildet. Die Öse kann dabei U-förmig bzw. oval ausgebildet sein. Die Öse kann jedoch auch ringförmig oder kreisförmig ausgebildet sein.

Der Ösenkörper ist unter Eingliederung eines Basiskörpers an dem Gegenstand gekoppelt. Der Basiskörper ist hierzu insbesondere fest mit dem Gegenstand gekoppelt. Bei dem Basiskörper kann es sich zum Beispiel um Einschweißhülsen oder auch um eine Einschweißkassette handeln. Der Basiskörper kann auch als Bügelkörper ausgebildet sein. Insbesondere kann der Basiskörper auch formschlüssig, beispielsweise durch eine Verschraubung mit dem Gegenstand gekoppelt sein. Gegenüber dem Basiskörper relativ beweglich ist dann der Ösenkörper gelagert. Der Ösenkörper ist insbesondere schwenkbar gegenüber dem Basiskörper und somit auch gegenüber dem Gegenstand bzw. dem Untergrund gelagert. Der Ösenkörper kann mindestens eine Ruheposition einnehmen. Diese ist bevorzugt entweder auf dem Untergrund des Gegenstandes liegend oder aber in bzw. mit dem Basiskörper gegenüber dem Untergrund des Gegenstandes versenkt gelagert. Von der Ruheposition kann nunmehr der Ösenkörper in eine Gebrauchsposition gebracht werden.

Erfindungsgemäß zeichnet sich der Anschlagpunkt oder Zurrpunkt dadurch aus, dass in dem Ösenkörper mindestens ein Magnet eingebracht ist, dergestalt, dass der Magnet den Ösenkörper mit seiner Magnetkraft in der Ruheposition oder Gebrauchsposition an dem Gegenstand oder auf einem Untergrund und/oder an dem Basiskörper hält.

Der Magnet ist in dem Ösenkörper selbst eingebracht, bevorzugt gegenüber dem Ösenkörper versenkt gelagert. Liegt der Ösenkörper beispielsweise auf dem Untergrund des Gegenstandes auf, so übt der Magnet eine Magnetkraft auf den Untergrund aus und hält den Ösenkörper fest an dem Untergrund. Ein Klappern wird hierdurch vermieden. Gleichzeitig wird vermieden, dass der Ösenkörper aus dieser Ruheposition unbeabsichtigt herausbewegt wird. Erst bei Überschreiten eines Kraftniveaus, beispielsweise Aufnahme des Ösenkörpers durch die Hand eines anwendenden Monteurs, wird die Magnetkraft überwunden und der Ösenkörper aus der Ruheposition in Gebrauchsposition gebracht.

Vorzugsweise ist der Gegenstand bzw. Untergrund aus Stahlwerkstoff ausgebildet. Sollte der Gegenstand bzw. Untergrund nicht magnetisch sein, so ist weiterhin im Rahmen der Erfindung vorgesehen, hier entsprechende Magneten und/oder Metallkörper einzubringen, so dass der Ösenkörper in Ruheposition gehalten ist.

Um den Magneten nunmehr in den Ösenkörper einzubringen, ist insbesondere vorgesehen, dass Rohmagneten verwendet werden. Diese sind als Zylinder oder Rechteckkörper bereitgestellt. Die Magneten werden dann in den Ösenkörper eingebracht. Hierzu kann im Falle eines Zylinders insbesondere eine Bohrung, beispielsweise eine Sacklochbohrung oder eine Ausfräsung, vorgenommen werden. Der Magnet selbst wird dann bevorzugt in der Ausnehmung verklebt. Hierzu wird besonders bevorzugt ein Zwei-Komponenten-Kleber verwendet.

Es ist im Rahmen der Erfindung jedoch auch vorstellbar, dass der Magnet alternativ oder ergänzend reibschlüssig und/oder formschlüssig gehalten ist. Hierzu kann insbesondere der Magnet in die Ausnehmung in dem Ösenkörper eingepresst werden.

Weiterhin besonders bevorzugt ist im Rahmen der Erfindung vorgesehen, dass der Ösenkörper zwei seitliche gegenüberliegende Schenkel aufweist. Bevorzugt ist in mindestens einem Schenkel auf einer Seite ein Magnet angeordnet. In einer besonders bevorzugten Ausgestaltungsvariante ist in mindestens einem Schenkel und auf jeder Seite ein Magnet angeordnet. Beispielsweise kann ein Ösenkörper somit zwei gegenüberliegende Ruhepositionen einnehmen. Zum einen kann der Ösenkörper auf seine Rückseite gelegt werden. Der Ösenkörper kann auch um ca. 180° geschwenkt werden und auf seine Vorderseite gelegt werden. Besonders bevorzugt ist vorgesehen, dass in jedem Schenkel auf jeder Seite ein Magnet vorgesehen ist. Somit sind mindestens zwei Magnete auf der Vorderseite und mindestens zwei Magnete auf der Rückseite vorgesehen, welche dann in der jeweiligen Ruheposition mittels Magnetkraft den Ösenkörper in der Ruheposition halten.

Besonders bevorzugt ist ein jeweiliger Magnet derart versenkt in dem Ösenkörper angeordnet, dass er mit einer den Magneten umgebenden Randfläche im Wesentlichen plan bzw. eben abschließt. Bei der Handhabung des Ösenkörpers steht somit der Magnet nicht störend gegenüber der jeweiligen Oberfläche über. Zumindest jedoch ist der Magnet versenkt angeordnet, so dass er nicht gegenüber einer Vorderseite bzw. Rückseite des Ösenkörpers übersteht.

Alternativ kann auch vorgesehen sein, dass der Ösenkörper seitlich abstehende Schenkel aufweist. Ein Magnet kann hierbei dann weiterhin bevorzugt in einem Schenkel angeordnet sein. Bevorzugt ist in einer solchen Ausgestaltungsvariante der Ösenkörper in einem Basiskörper versenkt gelagert. Der Basiskörper ist besonders bevorzugt eine Kassette. Wird der Ösenkörper in dem Basiskörper versenkt, so liegen in Ruheposition die Schenkel an einer Unterseite der Kassette, insbesondere an einer Unterseite einer Führung in der Kassette auf und werden hier von einem Magneten gehalten.

Letzterenfalls kann der Magnet derart positioniert sein, dass bei Verbringen des Ösenkörpers in eine Gebrauchsposition der Magnet ebenfalls in einer Führung an der Kassette anliegt und die eingenommene Gebrauchsposition zusätzlich lagefixiert.

Weitere Vorteile, Merkmale, Eigenschaften und Aspekte der vorliegenden Erfindung sind Gegenstand der nachfolgenden Beschreibung. Bevorzugte Ausgestaltungsvarianten werden in schematischen Figuren dargestellt. Diese dienen dem einfacheren Verständnis der Erfindung. Es zeigen:
- Figur 1 und 2: eine erste Ausgestaltungsvariante eines erfindungsgemäßen Anschlagpunktes oder Zurrpunktes auf einem Untergrund,
- Figur 3a, 3b und 4: eine zweite Ausgestaltungsvariante,
- Figur 5, 6 und 7: eine dritte Ausgestaltungsvariante,
- Figur 8 bis 12: eine vierte alternative Ausgestaltungsvariante eines versenkbaren Anschlagpunktes oder Zurrpunktes und
- Figur 13 bis 16: eine fünfte alternative Ausgestaltungsvariante eines versenkbaren Anschlagpunktes oder Zurrpunktes.

In den Figuren werden für gleiche oder ähnliche Bauteile dieselben Bezugszeichen verwendet, auch wenn eine wiederholte Beschreibung aus Vereinfachungsgründen entfällt.

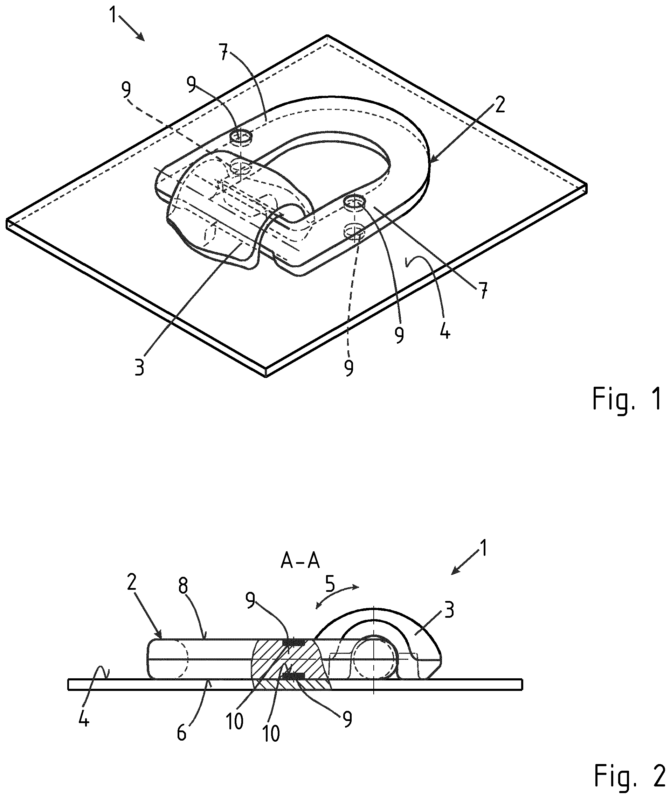

Figur 1 zeigt einen erfindungsgemäßen Anschlagpunkt oder Zurrpunkt 1. Dieser weist einen Ösenkörper 2 sowie einen Basiskörper 3 auf. Der Basiskörper 3 ist hier als Aufschweißlasche ausgebildet und kann über eine nicht näher dargestellte stoffschlüssige Verbindung mit dem Untergrund 4 gekoppelt werden. Insbesondere weist der Basiskörper 3 selbst eine Öffnung auf, in welcher der Ösenkörper 2 angeordnet ist. Die Öffnung kann sich auch zwischen dem Basiskörper 3 und einem Untergrund 4 ergeben, auf welchen der Basiskörper 3 befestigt ist. Der Ösenkörper 2 ist schwenkbar, wie in Figur 1 und 2 jeweils in Ruheposition dargestellt. Er ist in der Schwenkrichtung 5 jedoch um 180° schwenkbar an dem Basiskörper 3 gelagert. In der Ruheposition liegt eine hier dargestellte Vorderseite 6 des Ösenkörpers 2 auf dem Untergrund 4 auf. In diesem Beispiel sind in beiden Schenkeln 7 des Ösenkörpers 2 jeweils auf der Vorderseite 6 und der Rückseite 8 ein Magnet 9 angeordnet. Die Magnete 9 sind gegenüber der Vorderseite 6 bzw. Rückseite 8 versenkt angeordnet, dergestalt, dass die Vorderseite 6 bzw. Rückseite 8 plan bzw. eben ausgebildet ist. Beim Verzurren beispielsweise eines Zurrgurtes steht der Magnet 9 somit nicht störend gegenüber der Kontur der Vorderseite 6 über und kann hier auch nicht zu einem Verhaken des Zurrgurtes führen. Der Magnet 9 ist jeweils in einer Aufnahme 10 versenkt angeordnet und hier dargestellt in der Aufnahme 10 eingeklebt.

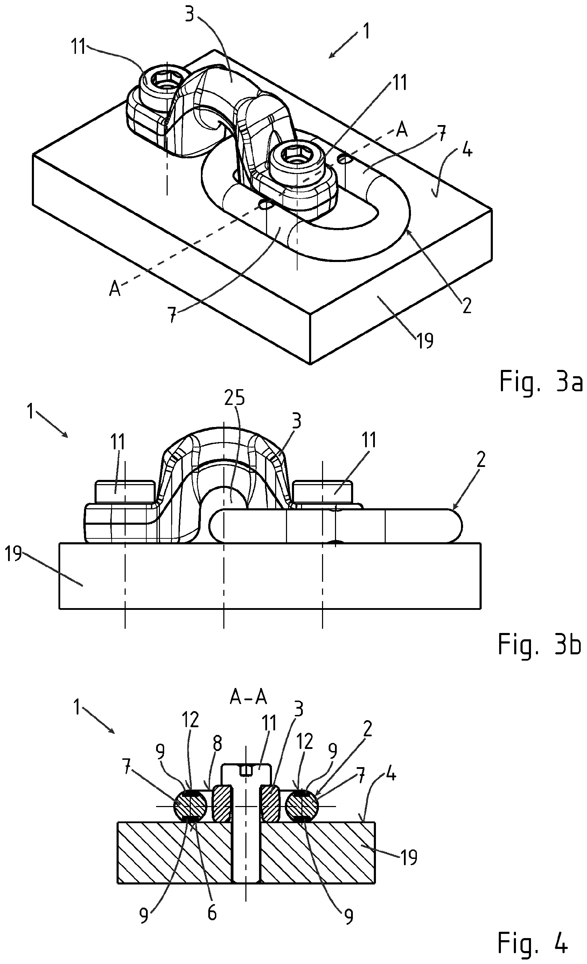

Figur 3a und 3b sowie 4 zeigen eine weitere Ausgestaltungsvariante eines erfindungsgemäßen Anschlagpunktes bzw. Zurrpunktes 1. Figur 3a zeigt dabei eine perspektivische Ansicht und Figur 3b eine Seitenansicht. Figur 4 zeigt eine Schnittansicht gemäß der Schnittlinie A-A. Der Anschlagpunkt oder Zurrpunkt 1 ist auf einem Untergrund 4 eines Gegenstandes 19 befestigt. Hierzu ist ein Basiskörper 3 in Form eines Bügels über zwei Schraubbolzen 11 mit dem Untergrund 4 verschraubt. Der Ösenkörper 2 ist wiederum schwenkbar an dem Basiskörper 3 gelagert. Auch hier sind Magnete 9 an der Vorderseite 6 und Rückseite 8 eines jeden Schenkels 7 angeordnet. In diesem Ausführungsbeispiel ist der Ösenkörper 2 aus einem Rundstahl hergestellt. Bevorzugt kann die Außenseite 12 des Magneten 9 der Außenkontur der Vorderseite 6 bzw. Rückseite 8 verlaufend angepasst sein. In diesem Fall wäre die Außenseite 12 des jeweiligen Magneten 9 abgerundet ausgebildet. Auch hier ergibt sich eine im Wesentlichen glatte bzw. nahtlose Oberfläche, ohne dass der Magnet 9 gegenüber der Oberfläche übersteht bzw. gegenüber dieser versenkt gelagert ist. Wird der Ösenkörper 2 von dem Untergrund 4 angehoben, wird die ausgeübte Magnetkraft überwunden und der Ösenkörper 2 kann in Gebrauchsposition geschwenkt werden. In der Ruheposition kann insbesondere zwischen dem Basiskörper 3 und dem Ösenkörper 2 ein Abstand bzw. Spiel 25 ausgebildet sein. Dadurch, dass der Ösenkörper 2 auf dem Untergrund 4 durch die Magnete 9 gehalten ist, entstehen keine Klappergeräusche und auch keine unkontrollierte Bewegung oder Umherschlagen des nicht benötigten Ösenkörpers 2 in dem Basiskörper 3.

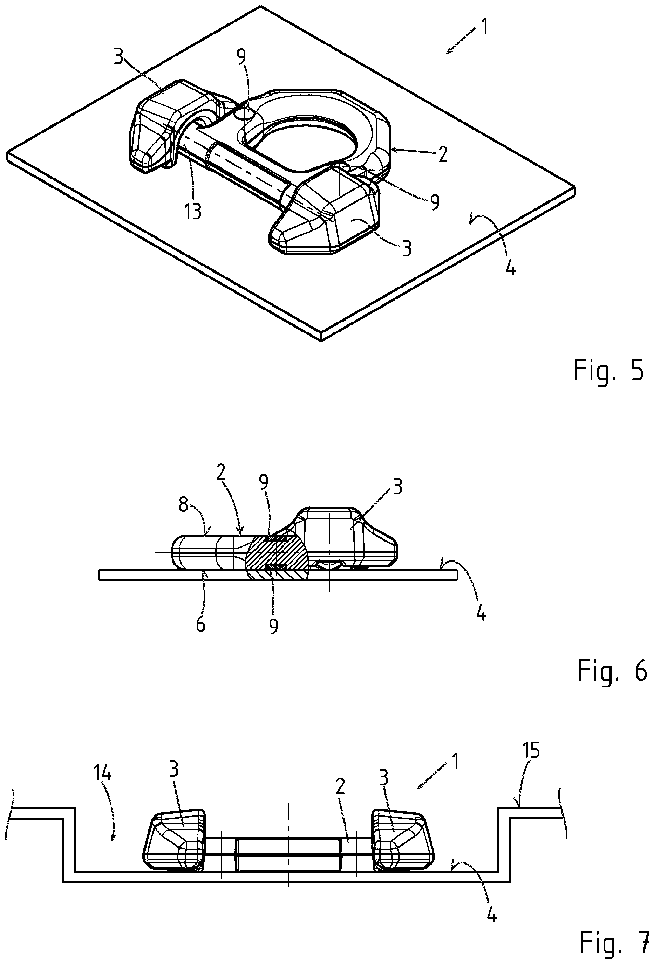

Figur 5 bis 7 zeigen eine dritte Ausgestaltungsvariante des erfindungsgemäßen Anschlagpunktes bzw. Zurrpunktes 1. Hierbei ist ebenfalls ein Ösenkörper 2 vorgesehen, welcher über einem zweigeteilten jeweils seitlich angeordneten Basiskörper 3 mit dem Untergrund gekoppelt ist. Die Basiskörper 3 sind dabei bevorzugt auf dem Untergrund 4 über eine nicht näher dargestellte thermische Fügenaht verschweißt. Der Ösenkörper 2 weist hierzu seitlich abstehende Schenkel 7 auf, wobei ein jeweiliger Schenkel 13 in den Basiskörper 3 eingreift. Ebenfalls ist wiederum in dem Ösenkörper 2 an einer Vorderseite 6 und an einer Rückseite 8 jeweils ein Magnet 9 angeordnet, dergestalt, dass in einer Ruheposition die Magneten 9 auf einer Seite mithin Vorderseite 6 bzw. Rückseite 8 auf dem Untergrund 4 aufliegen und den Ösenkörper 2 in der Ruheposition aufgrund der Magnetkraft halten.

In Figur 7 ist ergänzend dargestellt, dass der gesamte Anschlagpunkt 1 in einer Vertiefung 14 bzw. Mulde gelagert ist. Somit steht der Anschlagpunkt oder Zurrpunkt 1 beispielsweise gegenüber einer angedeuteten Ladefläche 15 oder Oberfläche eines Gegenstandes in Ruheposition nicht über. Diese Ausgestaltungsvariante kann auch für alle anderen benannten Ausführungsbeispiele gleichsam gelten.

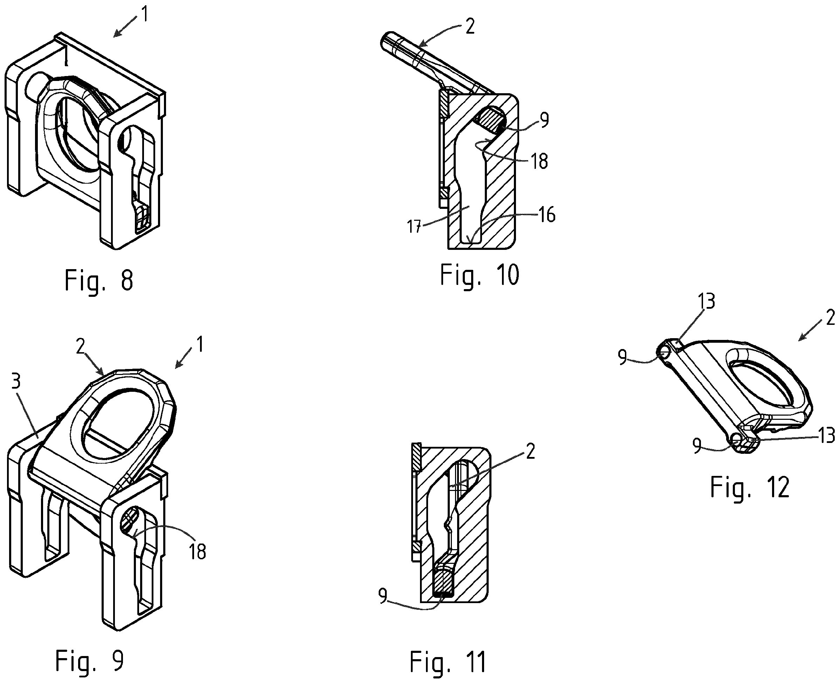

Figuren 8 bis 12 zeigen eine weitere Ausgestaltungsvariante eines Anschlagpunktes oder Zurrpunktes 1. Ein solcher Zurrpunkt ist aus der DE 20 2015 100 750 U1 bekannt.

Erfindungsgemäß ist nunmehr vorgesehen, dass an einer Unterseite der seitlich abstehenden Schenkel 13 Magnete 9 eingesetzt sind. Somit kann in der in Figur 8 und 11 dargestellten Ruheposition der jeweilige Magnet 9 an einer Unterseite 16 der Kulisse 17 anliegen und hier den Ösenkörper 2 in der versenkten Ruheposition zusätzlich zu seiner Gewichtskraft durch Magnetkraft halten. Ferner kann der Magnet 9 gemäß Figur 9 und 10 in der Gebrauchsposition an einer Innenseite 18 der Kulisse 17 anliegen und somit zusätzlich zur Abstützung aufgrund der Gewichtskraft auch durch den Magnet 9 aufgrund der Magnetkraft in der Gebrauchsposition gehalten werden.

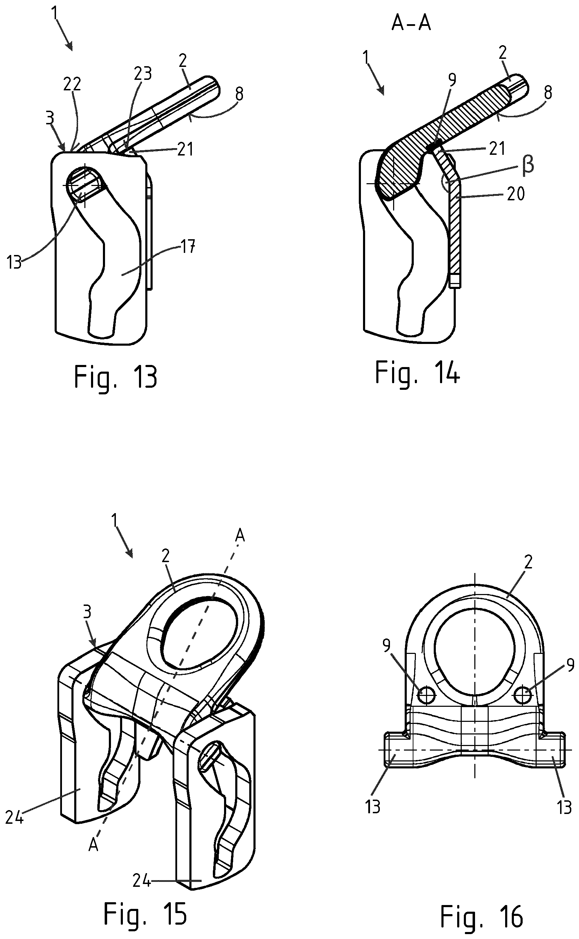

Figur 13 bis 16 zeigen eine weitere Variante eines Anschlag- bzw. Zurrpunktes 1 in verschiedenen Ansichten. Hier ist ein Ösenkörper 2 ausgebildet mit seitlich abstehenden Schenkeln 13. Der Ösenkörper 2 ist in einem Basiskörper 3 in Form einer Kassette, insbesondere Einschweißkassette versenkbar gelagert. Hierzu kann er über eine Kulisse 17 in eine nicht dargestellte Ruheposition gebracht werden oder wie in Figuren 13, 14 und 15 dargestellt, in einer Gebrauchsposition gehalten sein. Der Ösenkörper 2 steht in der Gebrauchsposition gegenüber dem Basiskörper 3 über und ist auch in dem Basiskörper 3 schwenkbar gelagert.

Eine Rückseite 8 des Ösenkörpers 2 stützt sich dabei an einer hinteren Wand 20 des Basiskörpers 3 ab. Hierzu steht ein Teil 21 der hinteren Wand 20 über eine Oberseite 22 über. Insbesondere ist der Teil 21 in einem Winkel β schräg zur Wand 20 angeordnet, so dass der Ösenkörper 2 in Gebrauchsposition ebenfalls schräg abgestützt ist. An einer Stirnseite 23 der Wand 20 stützt sich die Rückseite 8 des Ösenkörpers 2 ab. Hier sind wiederum Magnete 9 in den Ösenkörper 2 eingesetzt, so dass die Magnete 9 den in Gebrauchsposition abgestützten Ösenkörper 2 mit einer Magnetkraft halten. Zusätzlich kann der Ösenkörper 2 aufgrund seiner Gewichtskraft ebenfalls in der Gebrauchsposition abgestützt sein.

Optional ergänzend oder alternativ können in den seitlich abstehenden Schenkeln 13 analog zu der vorgenannten Ausgestaltungsvariante gemäß der Figuren 8 bis 12 ebenfalls Magnete 9 eingesetzt sein, welche insbesondere in einer in Figur 11 dargestellten Ruheposition den in der Kassette versenkten Ösenkörper 2 halten.

Der Basiskörper 3 in Form der Kassette gemäß Figur 15 ist ausgebildet durch die rückseitige Wand 20 sowie zwei seitliche Einschweißbleche 24, in denen die Kulissen 17 angeordnet sind.

### Bezugszeichen:

- 1 -: Anschlagpunkt
- 2 -: Ösenkörper
- 3 -: Basiskörper
- 4 -: Untergrund
- 5 -: Schwenkrichtung
- 6 -: Vorderseite zu 2
- 7 -: Schenkel
- 8 -: Rückseite zu 2
- 9 -: Magnet
- 10 -: Aufnahme
- 11 -: Schraubbolzen
- 12 -: Außenseite zu 9
- 13 -: Schenkel
- 14 -: Vertiefung
- 15 -: Ladefläche
- 16 -: Unterseite
- 17 -: Kulisse
- 18 -: Innenseite
- 19 -: Gegenstand
- 20 -: Wand
- 21 -: Teil zu 20
- 22 -: Oberseite zu 3
- 23 -: Stirnseite zu 20
- 24 -: Einschweißblech
- 25 -: Spiel

- β -: Winkel

## Patentansprüche

1. Anschlagpunkt oder Zurrpunkt (1) an einem Gegenstand, wobei der Anschlagpunkt oder Zurrpunkt (1) mit einem Hebe-, Zug- oder Zurrmittel koppelbar ist, und wobei der Anschlagpunkt oder Zurrpunkt (1) einen Basiskörper (3) und einen Ösenkörper (2) aufweist, wobei der Ösenkörper (2) relativ beweglich über den Basiskörper (3) an dem Gegenstand (19) gekoppelt ist und dass der Ösenkörper (2) von einer Ruheposition in eine Gebrauchsposition bringbar ist, **dadurch gekennzeichnet, dass** in dem Ösenkörper (2) mindestens ein Magnet (9) eingebracht ist, dergestalt, dass der Magnet (9) den Ösenkörper (2) mit seiner Magnetkraft in der Ruheposition oder Gebrauchsposition an dem Gegenstand oder auf einem Untergrund (4) und/oder an dem Basiskörper (3) hält.

2. Anschlagpunkt oder Zurrpunkt (1) nach Patentanspruch 1, **dadurch gekennzeichnet, dass** der Magnet (9) ein Rohmagnet ist, insbesondere ist der Magnet (9) als Zylinder oder Rechteckkörper ausgebildet.

3. Anschlagpunkt oder Zurrpunkt (1) nach Patentanspruch 1 oder 2, **dadurch gekennzeichnet, dass** mindestens zwei Magnete (9) in den Ösenkörper (2) eingebracht sind, bevorzugt vier Magnete (9).

4. Anschlagpunkt oder Zurrpunkt (9) nach einem der Patentansprüche 1 bis 3, **dadurch gekennzeichnet, dass** der Ösenkörper (2) zwei Schenkel (7) aufweist, wobei ein Magnet (9) jeweils in einem Schenkel (7) angeordnet ist.

5. Anschlagpunkt oder Zurrpunkt (1) nach Patentanspruch 4, **dadurch gekennzeichnet, dass** in jedem Schenkel (7) des Ösenkörpers (2) auf einer Vorderseite (6) und einer Rückseite (8) mindestens ein Magnet (9) angeordnet ist.

6. Anschlagpunkt oder Zurrpunkt (1) nach einem der Patentansprüche 1 bis 5, **dadurch gekennzeichnet, dass** in dem Ösenkörper (2) eine Ausnehmung, insbesondere eine Sacklochbohrung eingebracht ist, in welcher der Magnet (9) versenkt angeordnet ist.

7. Anschlagpunkt oder Zurrpunkt (1) nach Patentanspruch 6, **dadurch gekennzeichnet, dass** der Magnet (9) derart versenkt angeordnet ist, dass er mit einer den Magneten (9) umgebenden Randfläche plan bzw. eben abschließt und/oder das der Magnet (9) eine Außenseite (12) aufweist, die an die Kontur des Osenkörpers (2) angepasst ist, bevorzugt ist die Außenseite (12) des Magneten (9) abgerundet ausgebildet.

8. Anschlagpunkt oder Zurrpunkt (1) nach einem der Patentansprüche 1 bis 7, **dadurch gekennzeichnet, dass** der Magnet (9) in dem Ösenkörer (2) eingeklebt ist, insbesondere mit einem Zwei-Komponenten-Kleber.

9. Anschlagpunkt oder Zurrpunkt (1) nach einem der Patentansprüche 1 bis 8, **dadurch gekennzeichnet, dass** der Magnet (9) in dem Ösenkörper (2) kraftschlüssig und/oder formschlüssig gehalten ist, bevorzugt ist der Magnet (9) in den Ösenkörper (2) eingepresst.

10. Anschlagpunkt oder Zurrpunkt (1) nach einem der Patentansprüche 1 bis 9, **dadurch gekennzeichnet, dass** der Ösenkörper (2) in dem Basiskörper (3) versenkbar gelagert ist.

11. Anschlagpunkt oder Zurrpunkt (1) nach einem der Patentansprüche 1 bis 3 und 6 bis 10, **dadurch gekennzeichnet, dass** der Ösenkörper (2) seitlich abstehende Schenkel (13) aufweist, wobei bevorzugt in mindestens einem Schenkel (7) ein Magnet (9) angeordnet ist.

12. Anschlagpunkt oder Zurrpunkt (1) nach einem der Patentansprüche 1 bis 11, **dadurch gekennzeichnet, dass** der Anschlag- oder Zurrpunkt (1) in der Ruheposition vertieft gegenüber dem ihn umgebenden Untergrund (4) gelagert ist.

## Claims

1. Anchorage point or lashing point (1) on an object, wherein the anchorage point or lashing point (1) can be coupled to a lifting, pulling or lashing means, and wherein the anchorage point or lashing point (1) has a base body (3) and an eyelet body (2), wherein the eyelet body (2) is coupled relatively movably over the base body (3) on the object (19) and the eyelet body (2) can be moved from a position of rest into a position of use, **characterised in that** at least one magnet (9) is inserted into the eyelet body (2) such that the magnet (9) holds the eyelet body (2) with its magnetic force in the position of rest or position of use on the object or on a support surface (4) and/or on the base body (3).

2. Anchorage point or lashing point (1) according to claim 1, **characterised in that** the magnet (9) is a raw magnet, in particular the magnet (9) is designed as a cylinder or rectangular body.

3. Anchorage point or lashing point (1) according to claim 1 or 2, **characterised in that** at least two magnets (9) are introduced into the eyelet body (2), preferably four magnets (9).

4. Anchorage point or lashing point (9) according to any of claims 1 to 3, **characterised in that** the eyelet body (2) has two sides (7), wherein a magnet (9) is arranged respectively in each side (7).

5. Anchorage point or lashing point (1) according to claim 4, **characterised in that** at least one magnet (9) is arranged in each side (7) of the eyelet body (2) on a front side (6) and a rear side (8).

6. Anchorage point or lashing point (1) according to any of claims 1 to 5, **characterised in that** in the eyelet body (2) a recess is formed, in particular a blind bore, in which the magnet (9) is arranged in a recessed position.

7. Anchorage point or lashing point (1) according to claim 6, **characterised in that** the magnet (9) is arranged in a recessed position such that it ends planar or flat with an edge surface surrounding the magnet (9) and/or the magnet (9) has an outer side (12), which is adjusted to the contour of the eyelet body (2), preferably the outer side (12) of the magnet (9) is designed to be rounded.

8. Anchorage point or lashing point (1) according to any of claims 1 to 7, **characterised in that** the magnet (9) is adhered into the eyelet body (2), in particular by means of a two component adhesive.

9. Anchorage point or lashing point (1) according to any of claims 1 to 8, **characterised in that** the magnet (9) is held in the eyelet body (2) in a force-fitting and/or form-fitting manner, preferably the magnet (9) is pressed into the eyelet body (2).

10. Anchorage point or lashing point (1) according to any of claims 1 to 9, **characterised in that** the eyelet body (2) is recessed into the base body (3).

11. Anchorage point or lashing point (1) according to any of claims 1 to 3 and 6 to 10, **characterised in that** the eyelet body (2) has laterally protruding sides (13), wherein a magnet (9) is arranged preferably in at least one side (7).

12. Anchorage point or lashing point (1) according to any of claims 1 to 11, **characterised in that** the anchorage or lashing point (1) is recessed in the position of rest relative to its surrounding support surface (4).

## Revendications

1. Point d'ancrage ou point d'amarrage (1) à un objet, dans lequel le point d'ancrage ou point d'amarrage (1) peut être attelé à un moyen d'élévation, de traction ou d'amarrage, et dans lequel le point d'ancrage ou point d'amarrage (1) comporte un corps de base (3) et un corps d'œillet (2), le corps d'œillet (2) étant attelé à l'objet (19) de manière relativement mobile via le corps de base (3), et de manière à ce que le corps d'œillet (2) puisse être amené d'une position de repos dans une position d'utilisation, **caractérisé en ce qu'**au moins un aimant (9) est posé dans le corps d'œillet (2) de telle sorte que l'aimant (9) maintient le corps d'œillet (2) par sa force magnétique dans la position de repos ou position d'utilisation sur l'objet ou sur un support (4) et/ou sur le corps de base (3).

2. Point d'ancrage ou point d'amarrage (1) selon la revendication 1, **caractérisé en ce que** l'aimant (9) est un aimant brut, en particulier l'aimant (9) est conçu sous forme de cylindre ou de corps rectangulaire.

3. Point d'ancrage ou point d'amarrage (1) selon la revendication 1 ou 2, **caractérisé en ce qu'**au moins deux aimants (9) sont posés dans le corps d'œillet (2), de préférence quatre aimants (9).

4. Point d'ancrage ou point d'amarrage (1) selon l'une des revendications 1 à 3, **caractérisé en ce que** le corps d'œillet (2) comporte deux branches (7), dans lequel un aimant (7) est agencé respectivement dans une branche (7).

5. Point d'ancrage ou point d'amarrage (1) selon la revendication 4, **caractérisé en ce qu'**au moins un aimant (9) est agencé dans chaque branche (7) du corps d'œillet (2) sur une face avant (6) et une face arrière (8).

6. Point d'ancrage ou point d'amarrage (1) selon l'une des revendications 1 à 5, **caractérisé en ce que** dans le corps d'œillet (2) est posé un évidement, en particulier un alésage borgne, dans lequel l'aimant (9) est agencé de manière encastrée.

7. Point d'ancrage ou point d'amarrage (1) selon la revendication 6, **caractérisé en ce que** l'aimant (9) est agencé encastré de manière à ce qu'il s'arrête de façon plane et/ou affleurante avec une surface de bord entourant l'aimant (9), et/ou l'aimant (9) présente une face extérieure (12) qui est adaptée au contour du corps d'œillet (2), de préférence la face extérieure (12) de l'aimant (9) est de forme arrondie.

8. Point d'ancrage ou point d'amarrage (1) selon l'une des revendications 1 à 7, **caractérisé en ce que** l'aimant (9) est encollé dans le corps d'œillet (2), en particulier avec un adhésif bicomposant.

9. Point d'ancrage ou point d'amarrage (1) selon l'une des revendications 1 à 8, **caractérisé en ce que** l'aimant (9) est maintenu dans le corps d'œillet (2) par complémentarité de force et/ou de forme, de préférence l'aimant (9) est monté serré dans le corps d'œillet (2).

10. Point d'ancrage ou point d'amarrage (1) selon l'une des revendications 1 à 9, **caractérisé en ce que** le corps d'œillet (2) est monté de manière à pouvoir être descendu dans le corps de base (3).

11. Point d'ancrage ou point d'amarrage (1) selon l'une des revendications 1 à 3 et 6 à 10, **caractérisé en ce que** le corps d'œillet (2) présente des branches (13) latéralement en saillie, un aimant (9) étant agencé de préférence dans au moins une branche (7).

12. Point d'ancrage ou point d'amarrage (1) selon l'une des revendications 1 à 11, **caractérisé en ce que** le point d'ancrage ou point d'amarrage (1) est monté dans la position de repos enfoncé par rapport au support (4) qui l'entoure.
